# EUROPÄISCHE PATENTSCHRIFT

(11) **EP 2 947 326 B1**
(45) Veröffentlichungstag und Bekanntmachung des Hinweises auf die Patenterteilung: **04.07.2018**
(21) Anmeldenummer: 14169581.7
(22) Anmeldetag: 23.05.2014
(51) Int. Cl.: F04D 13/08, F04D 15/00, F16K 15/02

(54) **Kreiselpumpe**
Centrifugal pump
Pompe centrifuge

(43) Veröffentlichungstag der Anmeldung: 25.11.2015
(73) Patentinhaber: Grundfos Holding A/S, 8850 Bjerringbro (DK)
(72) Erfinder: Sørensen, Thomas, 8600 Silkeborg (DK); Høpfner, Daniel, 8800 Viborg (DK)
(74) Vertreter: Patentanwälte Vollmann & Hemmer

(56) Entgegenhaltungen:
- WO-A1-97/05383
- WO-A1-2013/021387
- DE-A1- 3 622 130
- US-A- 4 967 783

## Beschreibung

Die Erfindung betrifft eine Kreiselpumpe, insbesondere eine mehrstufige Tauchpumpe mit den im Oberbegriff des Anspruchs 1 angegebenen Merkmalen.

Bei Kreiselpumpen zählt es zum Stand der Technik, innerhalb der Pumpe ein Rückschlagventil zu integrieren, um zu verhindern, dass die geförderte Flüssigkeit durch die Pumpe zurückfließen kann. Ein solches Rückschlagventil ist insbesondere bei mehrstufigen Tauchpumpen vorgesehen, um einen Rückfluss durch die Pumpe bei Stillstand der Pumpe zu verhindern.

Die Erfindung geht aus von einer mehrstufigen Tauchpumpe des Typs Grundfos SP 30. Bei dieser Pumpe handelt es sich um eine Brunnenpumpe, die in Betriebsstellung unten einen Antriebsmotor aufweist, mit einer darüber angeordneten Kupplung. Über die Kupplung ist der Antriebsmotor mit mehreren darüber angeordneten, von einer gemeinsamen Welle angetriebenen, Pumpenstufen verbunden. Einer letzten Pumpenstufe schließt sich ein Gehäuseteil an, welches ein Rückschlagventil aufweist und das ebenso wie die Kupplung seitlich Ausnehmungen aufweist, in welche Formschlusselemente eingreifen, die an den Enden von Spannbändern sitzen, mit welchen die Pumpenstufen zwischen dem endseitigem Gehäuseteil und der Kupplung eingespannt und mechanisch verbunden sind.

Das Rückschlagventil des endseitigen Gehäuseteils ist als Schweißkonstruktion ausgebildet und aus Blechen gebildet. Es weist einen in einer ringförmig umlaufenden Nut eingegliederten Dichtring auf, welcher die Auflagefläche für einen ebenfalls aus Blech gebildeten und im Wesentlichen tellerförmigen Dichtkörper bildet. Innerhalb des Ventils ist eine Führung in Form von Führungsarmen gebildet, welche den Dichtkörper zwischen seiner Schließstellung und der freigebenden geöffneten Stellung führt.

Zwar ist die Pumpe grundsätzlich für den aufrecht stehenden Betrieb konzipiert, doch kann sie auch liegend betrieben werden. Im liegenden Betrieb kann das bekannte Rückschlagventil insbesondere Probleme hinsichtlich der Dichtheit aufweisen, wenn der Ventilteller schwerkraftbedingt nicht zentriert am Dichtsitz zur Anlage kommt.

Des Weiteren kann das Rückschlagventil nur als Ganzes ausgetauscht werden, da weder Dichtung noch das diese aufnehmende Bauteil oder der Ventilteller aus dem Ventilgehäuse, welches als geschlossene Schweißkonstruktion ausgebildet ist, entfernt werden kann.

Aus WO 97/05383 ist eine einstufige Kreiselpumpe bekannt, bei der im Bereich zwischen Saugstutzen und Saugmund ein Rückschlagventil angeordnet ist, welches durchflussgesteuert ist und mittels einer Schraubenfeder in die geschlossene Position überführt wird wenn die Strömung abreißt.

Vor diesem Hintergrund liegt der Erfindung die Aufgabe zugrunde, eine gattungsgemäße Kreiselpumpe, insbesondere eine mehrstufige Tauchpumpe der vorbeschriebenen Art so auszubilden, dass die vorgenannten Nachteile vermieden werden, insbesondere die Pumpe mit einem Rückschlagventil zu versehen, welches, unabhängig von der Lage der Pumpe, einen dichten Verschluss gewährleistet. Im Weiteren soll das Rückschlagventil kostengünstig herzustellen und demontierbar sein, damit es ggf. gewartet werden kann.

Diese Aufgabe wird gemäß der Erfindung durch eine Kreiselpumpe mit den in Anspruch 1 angegebenen Merkmalen gelöst. Vorteilhafte Ausgestaltungen der Erfindung sind in den Unteransprüchen, der nachfolgenden Beschreibung und der Zeichnung angegeben. Hierbei können die in den Unteransprüchen und der Beschreibung angegebenen Merkmale jeweils für sich, aber auch in geeigneter Kombination die erfindungsgemäße Lösung gemäß Anspruch 1 weiter ausgestalten.

Die erfindungsgemäße Kreiselpumpe, insbesondere mehrstufige Tauchpumpe, weist ein Rückschlagventil mit einem Ventilsitz und einem dazu begrenzt bewegbar angeordneten Absperrkörper auf, wobei der Absperrkörper formschlüssig und bewegbar innerhalb einer Führung angeordnet ist, die diesen mit Spiel umgibt. Gemäß der Erfindung ist die Innenkontur der Führung entgegen der Hauptdurchströmungsrichtung zum Ventilsitz hin nach innen zulaufend ausgebildet.

Grundgedanke der vorliegenden Erfindung ist es, die Führung so auszugestalten, dass einerseits sich der Absperrkörper von der Schließstellung in die geöffnete Stellung mit Spiel bewegen kann, ohne dass die Gefahr eines Verkantens besteht, andererseits jedoch stets gewährleistet ist, dass er in Schließstellung eine vorbestimmte, vorzugsweise zentrierte, Position auf dem Ventilsitz einnimmt. Hierzu ist gemäß der Erfindung die Führung so ausgebildet, dass sie entgegen der Hauptströmungsrichtung, die bei mehrstufigen Tauchpumpen stets in Richtung der Längsachse der Pumpe liegt, nach innen, d. h. zum Zentrum hin, zulaufend ausgebildet ist. Die Ausgestaltung ist dabei so, dass der Absperrkörper in der Endphase der Bewegung auf den Ventilsitz hin durch die seitliche Führung in seine bestimmungsgemäße Position geführt wird, und zwar unabhängig davon, ob die Pumpe stehend, liegend oder in anderer Position betrieben wird. Durch diese nach innen zulaufende Innenkontur der Führung wird zudem erreicht, dass unmittelbar nach Abheben des Sperrkörpers vom Ventilsitz das radiale Spiel der Führung sich vergrößert, wodurch sich der Absperrkörper ausreichend frei bewegen und reibungsarm und ohne die Gefahr eines Verkantens in die geöffnete Stellung überführt werden kann.

Gemäß einer vorteilhaften Weiterbildung der Erfindung ist die Innenkontur der Führung nicht nur entgegen der Hauptströmungsrichtung zum Ventilsitz hin nach innen zulaufend ausgebildet, sondern auch in Hauptströmungsrichtung von einem mittleren, vom Ventilsitz beabstandeten Bereich zu einem Endbereich ebenfalls nach Innen zulaufend ausgebildet. Auf diese Weise wird sichergestellt, dass der Absperrkörper auch in geöffneter Stellung des Rückschlagventils in einer definierten, durch die Führung vorgegebene Position befindlich ist, sodass sich ein zu allen Seiten gleich großer Strömungsquerschnitt ergibt, wodurch zum einen Verwirbelungen weitgehend vermieden werden und zum anderen stets dieselbe vorbestimmte Position für die Rückschlagfunktion erreicht ist.

Vorteilhaft ist die Innenkontur der Führung in ihrem Endbereich radial nach innen und bezogen auf die Hauptströmungsrichtung zurückspringend verlaufend ausgebildet. Dieser zurückspringende Bereich dient dazu, dem Absperrkörper eine definierte Anlagefläche in geöffneter Stellung des Ventils zu geben.

Erstaunlicherweise hat sich gezeigt, dass es besonders vorteilhaft ist, wenn die Innenkontur der Führung im mittleren Bereich, also zwischen den nach innen zulaufenden Bereichen, teilkreisförmig ausgebildet ist. Dieser teilkreisförmige Bereich gibt insbesondere in radialer Richtung dem Absperrkörper einen größeren Spielraum als in den Endstellungen.

Vorteilhaft ist die Führung mit einer Vielzahl von Ausnehmungen oder Freiräumen ausgestaltet, die eine verlustarme Durchströmung in diesem Bereich erlauben. Dies kann in vorteilhafterweise dadurch erreicht werden, dass die Führung gemäß einer Weiterbildung der Erfindung nur durch über den Umfang des Absperrkörpers verteilt angeordnete Führungsarme gebildet ist, die an einem gemeinsamen Haltering befestigt sind. Eine solche Führung kann beispielsweise durch vier bis zehn solcher Führungsarme gebildet werden, welche die Strömung zwischen Ventilsitz und Absperrkörper in geöffneter Stellung praktisch verlustfrei durchlassen.

Führungsarme und Haltering können einstückig ausgebildet sein, beispielsweise als Gussbauteil oder durch andere formgebende Verfahren hergestellt sein.

Besonders vorteilhaft sind gemäß einer Weiterbildung der Erfindung die Führungsarme und der Haltering aus einem Blechabschnitt gebildet, wobei die Führungsarme aus dem Grundwerkstoff gebildet und demgegenüber abgebogen sind, vorzugsweise um 90°. Ein solcher Blechabschnitt kann als kostengünstiges Bauteil durch Stanzen oder Laserschneiden gebildet werden, wobei durch Laserschneiden die Führungsarme sehr präzise hergestellt werden können, welche nach einem Abbiegen, vorzugsweise um 90°, aus dem Grundwerkstoff die erfindungsgemäße Kontur zur Führung im dreidimensionalen Raum bilden. Dabei sind vorteilhaft die Führungsarme und der Haltering aus einem ringförmigen Blechabschnitt gebildet, wobei die Führungsarme um eine im Wesentlichen radial verlaufende Linie abgebogen sind. Unter radial verlaufender Linie ist eine solche gemeint, die radial zu einer gedachten Mittelachse des ringförmigen Blechabschnitts angeordnet ist. Die Führungsarme liegen also vor dem Abbiegen auf einem Kreisringabschnitt umlaufend nebeneinander und werden umgeben von dem Haltering, von dem Kreisringabschnitt werden sie dann um 90° abgebogen.

Vorteilhaft erfolgt das Abbiegen der Führungsarme in Richtung der durch Laufrad und Leitapparat der letzten Stufe vorgegebenen Drallrichtung der Förderflüssigkeit, um sicherzustellen, dass im normalen Förderbetrieb die Führungsarme durch den Drall der Förderflüssigkeit in Biegerichtung und nicht entgegen Biegerichtung belastet werden.

Der Absperrkörper wird vorteilhaft durch einen aus Blech geformten Teller gebildet, der eine zum Ventilsitz hin schräg gestellte ringförmige Anlagefläche aufweist. Ein solcher aus Blech geformter Teller kann kostengünstig hergestellt werden, ebenso wie der Haltering und die Führungsarme.

Um die Stabilität des Absperrkörpers zu erhöhen und die Bauhöhe zu verringern, ist der Absperrkörper vorteilhaft in dem durch die Anlagefläche umgebenden Bereich mit einer zentralen Ausstülpung versehen.

Vorteilhaft ist auch der Ventilsitz durch ein aus Blech geformtes ringförmiges Bauteil gebildet, das mit einer ringförmigen Dichtung versehen ist.

Vorteilhaft weist das Rückschlagventil ein Gehäuse auf, in welches die Führung, der Absperrkörper und der Ventilsitz formschlüssig und reversibel eingegliedert sind. Eine solche Anordnung ist besonders vorteilhaft, da die Bauteile des Rückschlagventils demontierbar sind, d. h. Absperrkörper und Ventilsitz gereinigt und ggf. erneuert werden können, wobei die übrigen Bauteile weiter verwendet werden können. Typischerweise wird lediglich der Dichtring erneuert, alle übrigen Bauteile können weiter verwendet werden.

Das Gehäuse des Rückschlagventils weist vorteilhaft eine im Wesentlichen zylindrische Form auf und ist an einem axialen Ende verjüngt ausgebildet und am anderen mit der Pumpe verbunden. Dabei kann das Gehäuse vorteilhaft eine Kupplung zur lösbaren Verbindung mit der Pumpe aufweisen oder Teil des Pumpengehäuses selbst bilden. Das Gehäuse kann beispielsweise Ausnehmungen aufweisen, in welche Formschlussmittel für die Zuganker eingreifen, welche die Pumpenstufen verspannen, d. h. im mechanischen Zusammenhalt in Achsrichtung der Pumpe halten.

Dabei ist das Pumpengehäuse vorteilhaft im Wesentlichen zylindrisch und das Ventilgehäuse so ausgebildet, dass es bündig an das Pumpengehäuse bzw. die letzte Pumpenstufe anschließt und das Pumpengehäuse nach oben hin verlängert.

Die Erfindung ist nachfolgend anhand von in den Figuren dargestellten Ausführungsbeispielen näher erläutert. Es zeigen:
- Fig. 1: in stark vereinfachter schematischer Darstellung eine mehrstufige Tauchpumpe mit Rückschlagventil im Längsschnitt,
- Fig. 2: das Rückschlagventil der Pumpe gemäß Figur 1 in Schließstellung in vergrößerter Darstellung im Längsschnitt,
- Fig. 3: das Ventil in geöffneter Stellung und Darstellung gemäß Fig. 2,
- Fig. 4: das Rückschlagventil gemäß Fig. 2 in Explosionsdarstellung,
- Fig. 5: das Ventil gemäß Fig. 4 im Längsschnitt und in Darstellung gemäß Fig. 4,
- Fig. 6: in stark vergrößerter Darstellung einen Führungsarm im Längsschnitt,
- Fig. 7: einen Blechabschnitt zur Bildung eines Halterings mit Führungsarmen in Draufsicht,
- Fig. 8: eine andere Ausführung eines Halterings mit Führungsarmen in Draufsicht und
- Fig. 9: einen Schnitt längs der Schnittlinie IX-IX in Fig. 8.

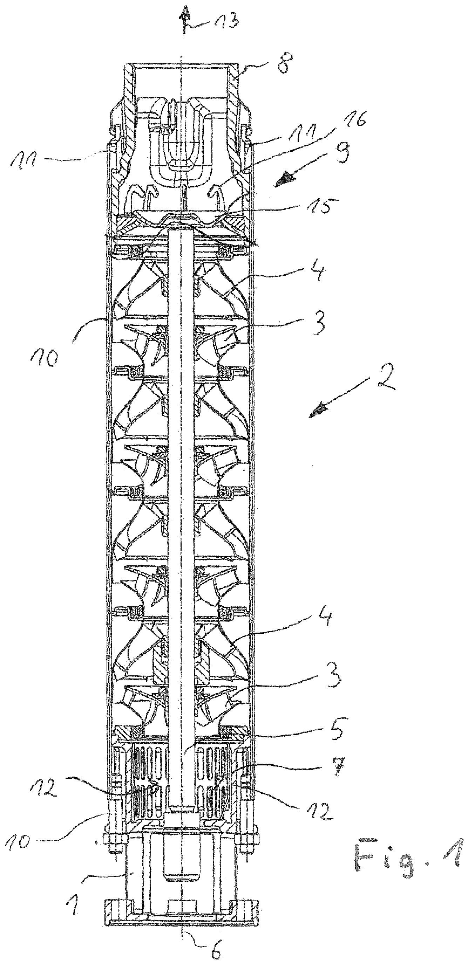

Bei der anhand von Fig. 1 dargestellten Pumpe ist der zum Betrieb erforderliche Antriebsmotor nicht dargestellt, dieser schließt in der Darstellung gemäß Fig. 1 unten an eine Kupplung 1 an, welche Antriebsmotor und Pumpe 2 miteinander verbindet. Die Pumpe 2 weist hier vier hydraulisch hintereinander geschaltete Pumpenstufen auf, jeweils bestehend aus einem Pumpenlaufrad 3 und einem in Strömungsrichtung diesem nachgeschalteten Leitapparat 4. Angetrieben werden die Pumpenlaufräder 3 über eine gemeinsame Welle 5, die an der Oberseite des obersten Leitapparates 4 endet und an der Unterseite bis zur Kupplung 1 reicht, wo sie zur drehfesten Verbindung mit dem freien Wellenende des Antriebsmotors ausgebildet ist. Im Bereich der Pumpenlaufräder 3 und der Leitapparate 4 wird das Gehäuse durch Blechformteile gebildet, wie dies an sich zum Stand der Technik zählt, es wird in diesem Zusammenhang auf entsprechend ausgebildete Brunnenpumpen des Typs Grundfos SP 30 verwiesen. In Richtung der Längsachse 6 der Pumpe werden diese, jeweils ein Pumpenlaufrad 3 bzw. einen Leitapparat 4 aufnehmenden Gehäuseteile zwischen einem unteren, den Flüssigkeitseinlass bildenden Gehäuseteil 7 und einem oberen Gehäuseteil 8, welches ein Rückschlagventil 9 aufnimmt, eingespannt, und zwar über seitliche Zuganker 10, die einerseits in Ausnehmungen 11 im oberen Gehäuseteil 8 und andererseits in der Kupplung 1 festgelegt sind. Die Zuganker 10 sind im Bereich der Kupplung 1 als Gewindebolzen ausgebildet und durchsetzen Bohrungen in der Kupplung 1 und sind dort mit Muttern verspannt.

Im Betrieb werden die Pumpenlaufräder 3 durch die gemeinsame Welle 5 angetrieben, die Förderflüssigkeit gelangt über Ausnehmungen 12 im unteren Gehäuseteil 7 ins Innere der Pumpe, von dort über die Pumpenstufen, in denen jeweils eine Druckerhöhung erfolgt, bis zum Leitapparat 4 der obersten Pumpenstufe, wo die Förderflüssigkeit das Rückschlagventil 9 durchdringt, um am oberen Ende des oberen Gehäuseteils 8 auszutreten. Der Hauptförderstrom erstreckt sich also in Richtung 13 durch die Pumpe, d. h. in Richtung der Längsachse 6 vom unteren Gehäuseteil 7 zum oberen Gehäuseteil 8. Die Förderflüssigkeit durchströmt das Rückschlagventil 9 jedoch nicht nur in Richtung 13, sondern ist dort auch drallbehaftet.

Der obere Gehäuseteil 8, der zugleich das Gehäuse des Rückschlagventils 9 bildet, sitzt formschlüssig unter Eingliederung einer Dichtung auf dem Leitapparat 4 der letzten Pumpenstufe und ist im Übrigen in Richtung der Längsachse 6 über die Zuganker 10 mit dem unteren Gehäuseteil 7 und der Kupplung 1 verbunden.

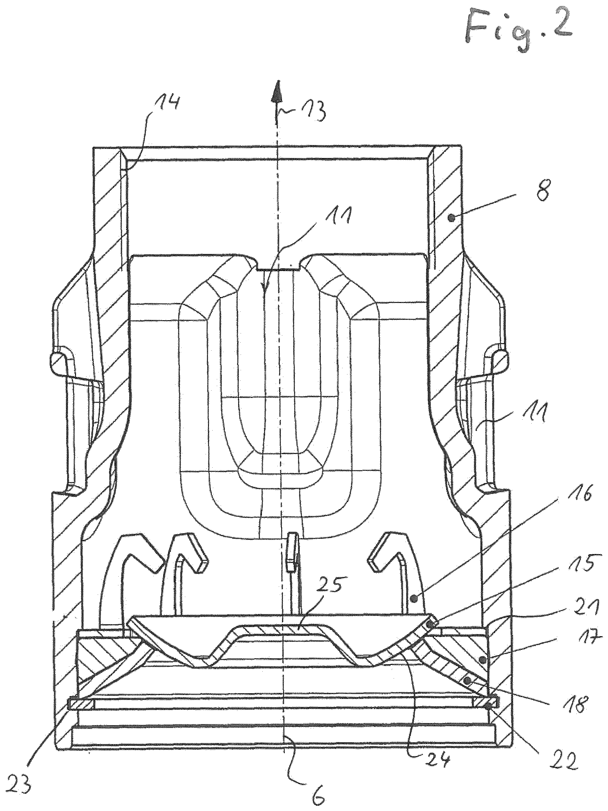

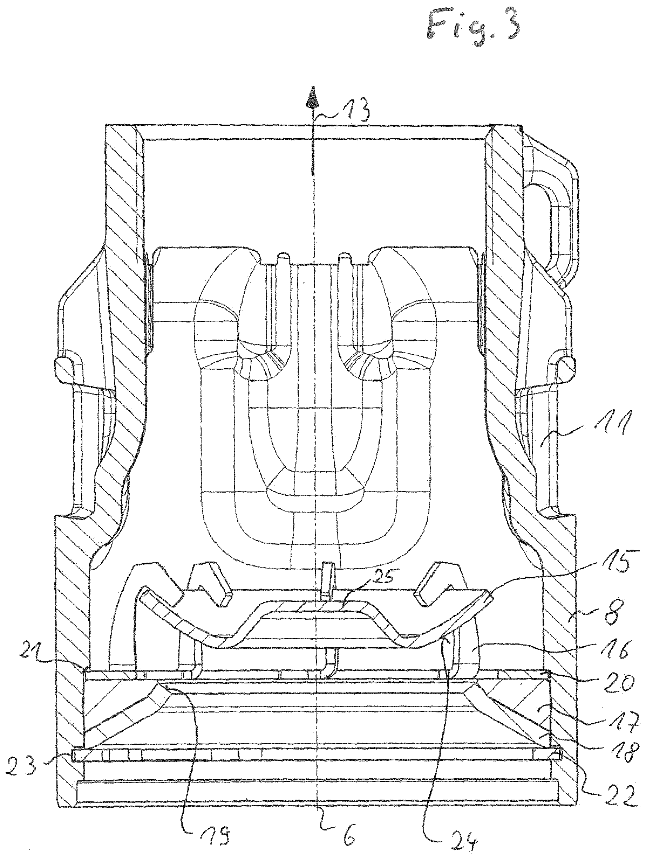

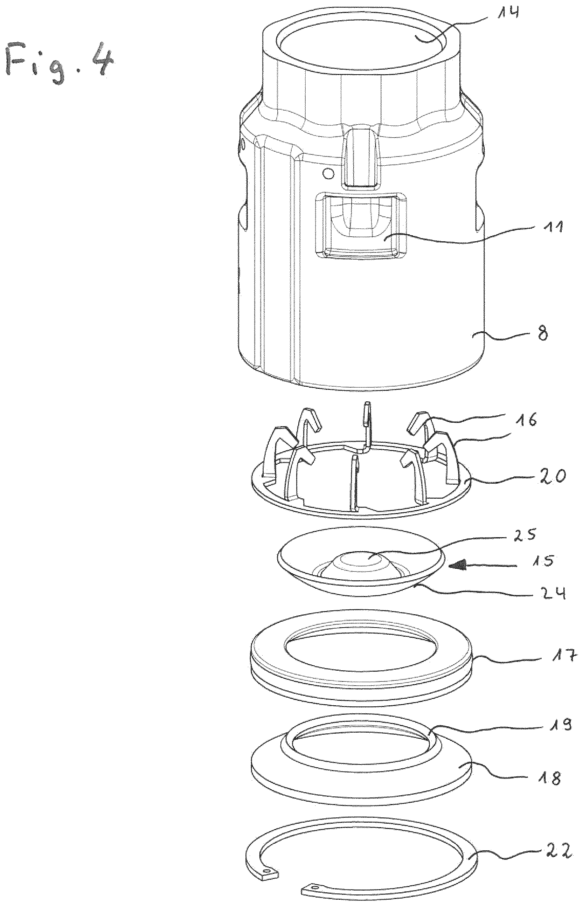

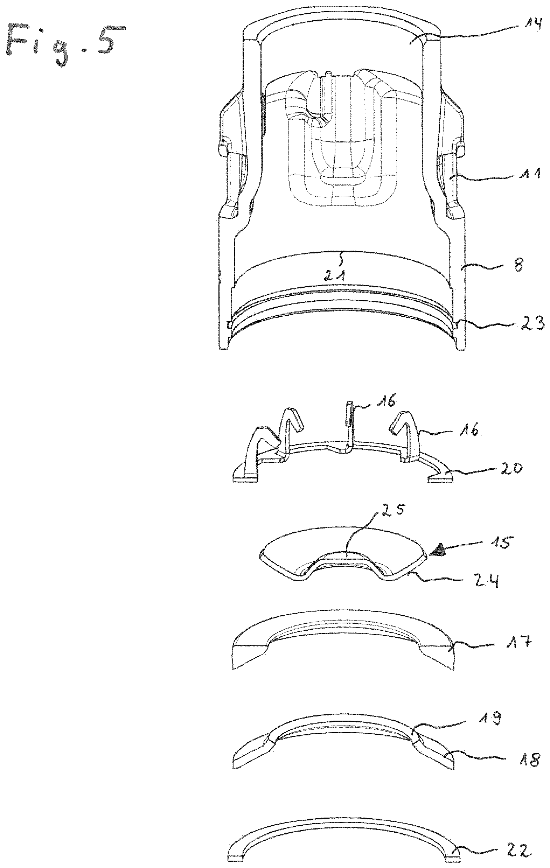

Das Rückschlagventil 9 ist in Fig. 2 in geschlossener und in Fig. 3 in geöffneter Stellung dargestellt. Es weist ein im Wesentlichen zylindrisches Gehäuse 8 auf, das zu den Pumpenstufen hin bündig in den zylindrischen Außenumfang der Pumpe übergeht. Zum oberen Ende der Pumpe hin ist es verjüngt ausgebildet und weist dort ein Innengewinde 14 zum Anschluss einer Förderleitung auf. Das Rückschlagventil 9 weist neben dem umgebenden Ventilgehäuse 8 einen tellerförmigen Absperrkörper 15 und eine diesen umgebenden und durch Führungsarme 16 gebildete Führung auf, welche den Absperrkörper 15 begrenzt bewegbar, im Übrigen jedoch formschlüssig nach oben, d. h. in Hauptströmungsrichtung 13 und nach außen, d. h. in radialer Richtung, aufnimmt. Der Absperrkörper 15 ist, wie in Fig. 2 dargestellt, zur dichtenden Anlage an einer ringförmigen Dichtung 17 vorgesehen, die ihrerseits von einem aus Blech geformten Ring 18 mit einer Anlagefläche 19 abgestützt wird, die zusammen mit der Dichtung den Ventilsitz des Rückschlagventils 9 bildet. Die Anlagefläche 19 ist, wie anhand der Fig. 4 und 5 besonders gut sichtbar ist, schräg gestellt und wird von der Dichtung 17 überdeckt. In geschlossenem Zustand des Ventils 9 drückt der Absperrkörper 15 mit seiner in den Figuren nach unten weisenden umlaufenden Schrägfläche auf den Innenumfang der Dichtung 17, die ihrerseits durch die Anlagefläche 19 des Rings 18 abgestützt ist, sodass ein dichter Ventilabschluss gegeben ist.

Die Führungsarme 16 sind an einem Haltering 20 befestigt, der von unten in das Ventilgehäuse 8 eingesetzt ist und an einem umlaufenden stufenförmigen Absatz 21 des Gehäuses 8 zur Anlage kommt. Nachfolgend sind die Dichtung 17 sowie der Ring 18 in das Ventilgehäuse 8 von unten eingeschoben und abschließend durch einen Spannring 22 formschlüssig gesichert, der in einer umlaufenden Nut 23 an der Innenseite des Ventilgehäuses 8 befestigt ist. Das Rückschlagventil 9 kann somit nach Entfernen des oberen Gehäuseteils 8 von der Pumpe 2 sowie Entfernen des Spannrings 22 demontiert, gewartet und wieder zusammengebaut werden, hierzu sind keine Spezialwerkzeuge erforderlich.

Die tragenden Bauteile des Ventils, nämlich der Haltering 20 mit den Führungsarmen 16, der Ring 18 sowie der Absperrkörper 15, sind bei anhand der Fig. 2 - 6 dargestellten Ausführungsvariante aus Blech gebildet. Der Absperrkörper 15 wird aus einer kreisrunden Scheibe gebildet und weist eine Schrägfläche 24 auf, die zur Anlage an der Dichtung 17 vorgesehen ist, sowie eine zentrale Ausstülpung 25, die der Versteifung des Bauteils dient. Der Absperrkörper 15 ist kreisrund und wird durch Führungsarme 16 zwischen seiner mit der Schrägfläche 24 an der Dichtung 17 anliegenden Schließstellung (Fig. 2) und der geöffneten Stellung, in welcher der Absperrkörper 15 an den freien Enden der Führungsarme 16 anliegt, geführt.

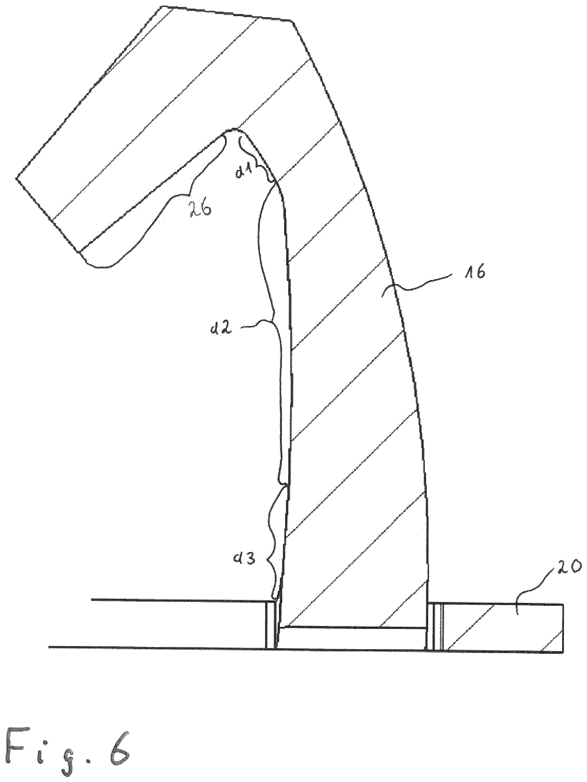

Um sicher zu stellen, dass unabhängig von der Lage der Pumpe der Absperrkörper 15 stets in seine bestimmungsgemäße Schließposition gelangt, sind die Führungsarme 16, wie insbesondere aus der Darstellung nach Fig. 6 ersichtlich ist, entgegen der Hauptströmungsrichtung 13 zum Ventilsitz, also zur Anlagefläche 19 hin, nach innen zulaufend ausgebildet. In diesem Bereich, der in Fig. 6 mit d3 gekennzeichnet ist, wird das seitliche Spiel zwischen den Führungsarmen 16 und dem Absperrkörper 15 umso geringer, je weiter der Absperrkörper 15 zur Anlagefläche 19 hin bewegt wird. Auf diese Weise kann auch bei horizontal betriebener Pumpe 2 sichergestellt werden, dass der Absperrkörper 15 beim Bewegen in seine Schließstellung in die bestimmungsgemäße zentrierte Lage zur Anlagefläche 19 geführt wird.

Neben dem nach innen zulaufenden Bereich d3 schließt sich ein mittlerer Bereich d2 an, in welchem die Führungsarme 16 den Absperrkörper 15 mit deutlichem Spiel umgeben, an den wiederum ein Bereich d1 anschließt, welcher nach innen zulaufend ausgebildet ist, jedoch in Gegenrichtung zu dem Bereich d3. Im Bereich d1 läuft die Innenkontur der Führung, also die Innenseite der Führungsarme 16, in Hauptströmungsrichtung 13 hin nach innen zu. Schließlich weist die Führung einen zurückspringenden und ebenfalls nach innen, jedoch entgegen der Hauptströmungsrichtung 13, zulaufenden Bereich 26 auf, wodurch sich diese in Fig. 6 deutlich sichtbare hakenförmige Innenkontur der Führungsarme 16 ergibt, dieser zurückspringende Bereich 26 stützt den Absperrkörper 15 in seiner geöffneten Stellung ab (siehe Fig. 3).

In dem dargestellten Ausführungsbeispiel sind Bereiche d1, d2 und d3 teilkreisförmig konturiert, wobei der Durchmesser des Teilkreises d2 größer als der des Teilkreises d3 und der wiederum größer als der des Teilkreises d1 ist. Der Durchmesser des Teilkreises d1 ist größer als der Durchmesser des Absperrkörpers 15, der wiederum größer ist als der Durchmesser der zentralen Ausnehmung im Ring 18.

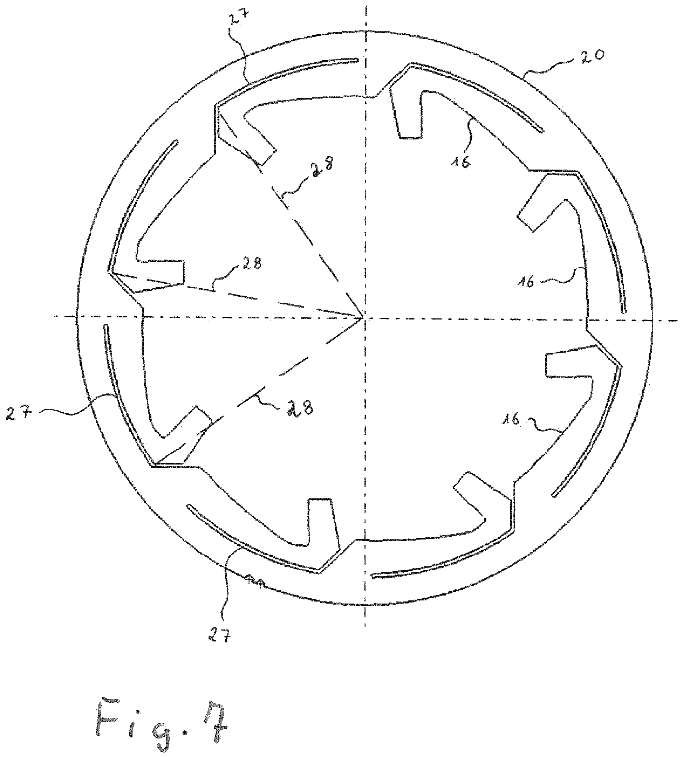

Hergestellt ist die durch die Führungsarme 16 gebildete Führung aus einem ringförmigen Blechabschnitt, wie er in Fig. 7 dargestellt ist. Dieser Blechabschnitt weist einen durchgehend umlaufenden äußeren Ring auf, welcher den späteren Haltering 20 bildet. Ein innenliegender Ring ist durch Einschnitte 27, die mittels Laserstrahl erfolgt sind, hier in insgesamt acht Segmente geteilt, die jeweils einen Führungsarm 16 bilden. Die Innenkontur der Führungsarme 16 ist somit durch die Innenkontur dieses Rings gebildet. Um die Führung für den Absperrkörper 15 zu bilden, sind diese durch die Einschnitte 27 gebildeten segmentartigen Abschnitte um eine im Wesentlichen radial zu dem Ring verlaufende Linie 28 aus dem Blechabschnitt um 90° nach oben abgebogen. Die Abbiegung der Führungsarme 16 aus dem durch den Ring gebildeten Grundwerkstoff heraus um 90° nach oben, erfolgt in einer Richtung, die der konstruktionsbedingt am Ende der letzten Pumpenstufe zu erwartenden Drallrichtung der Förderflüssigkeit entspricht, damit die durchströmende Förderflüssigkeit die Führungsarme 16 in Biegerichtung und nicht in Gegenrichtung belastet.

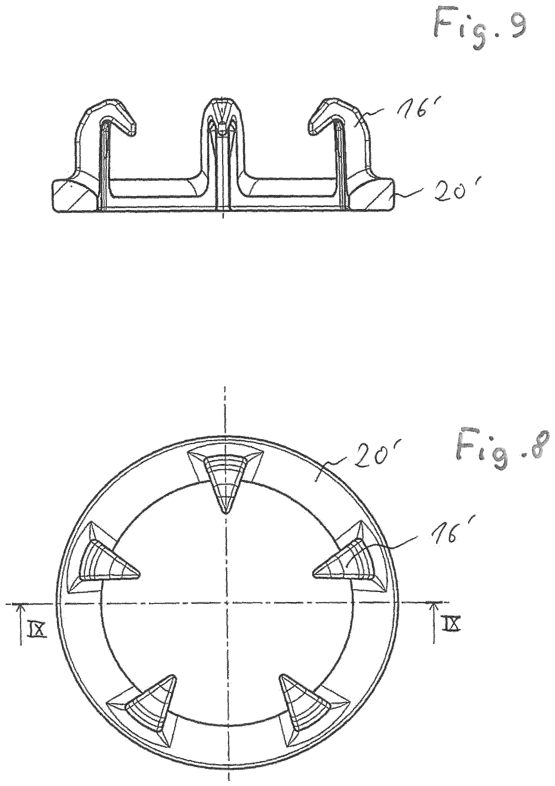

Eine alternative Ausführung der Führung ist anhand der Fig. 8 und 9 dargestellt. Dort sind insgesamt 5 Führungsarme 16' vorgesehen, die einstückig mit einem Haltering 20' ausgebildet sind. Auch wenn dies in Fig. 9 nicht erkennbar ist, so ist die Innenkontur der Führungsarme 16' in gleicher Weise ausgebildet wie die der anhand von Fig. 6 dargestellten Führungsarme 16'. Das Bauteil ist als Gussteil gefertigt.

### Bezugszeichen

- 1: - Kupplung
- 2: - Pumpe
- 3: - Pumpenlaufrad
- 4: - Leitapparat
- 5: - Welle
- 6: - Längsachse der Pumpe
- 7: - unterer Gehäuseteil
- 8: - oberer Gehäuseteil, Ventilgehäuse
- 9: - Rückschlagventil
- 10: - Zuganker
- 11: - Ausnehmungen in 8
- 12: - Ausnehmungen in 7
- 13: - Hauptströmungsrichtung
- 14: - Innengewinde
- 15: - Absperrkörper
- 16: - Führungsarme
- 16': - Führungsarme in den Fig. 8 und 9
- 17: - Dichtung
- 18: - Ring
- 19: - Anlagefläche
- 20: - Haltering
- 20': - Haltering in den Fig. 8 und 9
- 21: - Absatz in 8
- 22: - Spannring
- 23: - Nut in 8
- 24: - Schrägfläche von 15
- 25: - Ausstülpung
- 26: - zurückspringender Teil
- 27: - Einschnitte
- 28: - Linien
- d1 - d3: - Bereiche der Innenkontur

## Patentansprüche

1. Kreiselpumpe, insbesondere mehrstufige Tauchpumpe (2), mit einem Rückschlagventil (9) mit einem Ventilsitz (19) und einem dazu begrenzt bewegbar angeordneten Absperrkörper (15), **dadurch gekennzeichnet, dass** der Absperrkörper (15) formschlüssig und bewegbar innerhalb einer Führung (16) angeordnet ist, die den Absperrkörper (15) mit Spiel umgibt, wobei die Innenkontur der Führung (16) entgegen der Hauptdurchströmungsrichtung (13) zum Ventilsitz (19) hin nach innen zulaufend ausgebildet ist.

2. Kreiselpumpe nach Anspruch 1, **dadurch gekennzeichnet, dass** die Innenkontur der Führung (16) in Hauptdurchströmungsrichtung (13) von einem mittleren, vom Ventilsitz (19) beabstandeten Bereich (d2) zu einem Endbereich (d1) hin ebenfalls nach innen zulaufend ausgebildet ist.

3. Kreiselpumpe nach Anspruch 2, **dadurch gekennzeichnet, dass** die Innenkontur der Führung (16) in ihrem Endbereich (26) radial nach innen und bezogen auf die Hauptströmungsrichtung (13) zurückspringend verläuft.

4. Kreiselpumpe nach Anspruch 2 oder 3, **dadurch gekennzeichnet, dass** die Innenkontur der Führung (16) im mittleren Bereich (d2) teilkreisförmig verläuft.

5. Kreiselpumpe nach einem der vorhergehenden Ansprüche, **dadurch gekennzeichnet, dass** die Führung durch über den Umfang des Absperrkörpers (15) verteilt angeordnete Führungsarme (16) gebildet ist, die an einem gemeinsamen Haltering (20) befestigt sind.

6. Kreiselpumpe nach Anspruch 5, **dadurch gekennzeichnet, dass** die Führungsarme (16') und der Haltering (20') einstückig und vorzugsweise als Gussbauteil gebildet sind.

7. Kreiselpumpe nach Anspruch 5, **dadurch gekennzeichnet, dass** die Führungsarme (16) und der Haltering (20) aus einem Blechabschnitt gebildet sind, wobei die Führungsarme (16) durch Biegen aus dem Grundwerkstoff gebildet und demgegenüber vorzugsweise um 90° abgebogen sind.

8. Kreiselpumpe nach Anspruch 6, **dadurch gekennzeichnet, dass** die Führungsarme (16) und der Haltering (20) aus einem ringförmigen Blechabschnitt gebildet und die Führungsarme (16) jeweils um eine im Wesentlichen radial verlaufende Linie (28) abgebogen sind.

9. Kreiselpumpe nach Anspruch 7, **dadurch gekennzeichnet, dass** die Führungsarme (16) in Richtung des sich durch Laufrad (3) und Leitapparat (4) der letzten Pumpenstufe vorgegebenen Drallrichtung der Förderflüssigkeit abgebogen sind.

10. Kreiselpumpe nach einem der vorhergehenden Ansprüche, **dadurch gekennzeichnet, dass** der Absperrkörper (15) durch einen aus Blech geformten Teller gebildet ist, der eine zum Ventilsitz (19) hin gerichtete und schräggestellte ringförmige Anlagefläche (24) aufweist.

11. Kreiselpumpe nach Anspruch 10, **dadurch gekennzeichnet, dass** der Absperrkörper (15) in dem durch die Anlagefläche (24) umgebenen Bereich eine zentrale Ausstülpung (25) aufweist.

12. Kreiselpumpe nach einem der vorhergehenden Ansprüche, **dadurch gekennzeichnet, dass** der Ventilsitz (19) durch ein aus Blech geformtes ringförmiges Bauteil (18) sowie eine ringförmige Dichtung (17) gebildet ist.

13. Kreiselpumpe nach einem der vorhergehenden Ansprüche, **dadurch gekennzeichnet, dass** das Rückschlagventil (9) ein Ventilgehäuse (8) aufweist, in welches die Führung (16), der Absperrkörper (15) und der Ventilsitz (19) formschlüssig lösbar eingegliedert sind.

14. Kreiselpumpe nach Anspruch 13, **dadurch gekennzeichnet, dass** das Ventilgehäuse (8) eine im Wesentlichen zylindrische Form aufweist, an einem Ende verjüngt ausgebildet und am anderen Ende vorzugsweise mit einer Kupplung zur lösbaren Verbindung mit der Pumpe versehen ist.

15. Kreiselpumpe nach Anspruch 14, **dadurch gekennzeichnet, dass** das Pumpengehäuse im Wesentlichen zylindrisch ist und das Ventilgehäuse (8) an das Pumpengehäuse bündig anschließt und dieses nach oben hin verlängert.

## Claims

1. A centrifugal pump, in particular a multi-stage submersible pump (2), with a non-return valve (9) with a valve seat (19) and with a shut-off body (15) which is movably arranged thereto in a limited manner, **characterised in that** the shut-off body (15) is arranged with a positive fit and in a movable manner within a guide (16) which surrounds the shut-off body (15) with play, and the inner contour of the guide (16) is designed in a manner tapering inwards towards the valve seat (19) counter to the main flow direction (13).

2. A centrifugal pump according to claim 1, **characterised in that** the inner contour of the guide (16) in the main flow direction (13) is likewise designed tapering inwards from a middle region (d2) distanced to the valve seat (19), towards an end region (d1).

3. A centrifugal pump according to claim 2, **characterised in that** the inner contour of the guide (16) in its end region (26) runs radially inwards and in a returning manner with respect to the main flow direction (13).

4. A centrifugal pump according to claim 2 or 3 **characterised in that** the inner contour of the guide (16) runs in a part-circle-shaped manner in the middle region (d2).

5. A centrifugal pump according to one of the preceding claims, **characterised in that** the guide is formed by guide arms (16) which are arranged distributed over the periphery of the shut-off body (15) and which are fastened on a common holding ring (20).

6. A centrifugal pump according to claim 5, **characterised in that** the guide arms (16') and the holding ring (20') are designed in a single-piece manner and preferably as a moulded component.

7. A centrifugal pump according to claim 5, **characterised in that** the guide arms (20) and the holding ring (16) are formed from a sheet metal section, wherein the guide arms (16) are formed by way of bending out of the base material and are preferably bent away by 90° with respect to this.

8. A centrifugal pump according to claim 6, **characterised in that** the guide arms (16) and the holding ring (20) are formed from an annular sheet-metal section, and the guide arms (16) are bent away in each case about an essentially radially running line (28).

9. A centrifugal pump according to claim 7, **characterised in that** the guide arms (16) are bent away in the direction of the swirl direction of the delivery fluid which is defined by the impeller (3) and the diffuser (4) of the last pump stage.

10. A centrifugal pump according to one of the preceding claims, **characterised in that** the shut-off body (15) is formed by a plate which is shaped from sheet-metal and which comprises an obliquely set, annular contact surface (24) directed towards the valve seat (19).

11. A centrifugal pump according to claim 10, **characterised in that** the shut-off body (15) in the region surrounded by the contact surface (24) comprises a central boss (25).

12. A centrifugal pump according to one of the preceding claims, **characterised in that** the valve seat (19) is formed by an annular component (18) shaped from sheet-metal, as well as by an annular seal (17).

13. A centrifugal pump according to one of the preceding claims, **characterised in that** the non-return valve (9) comprises a valve housing (8), into which the guide (16), the shut-off body (15) and the valve seat (19) can be releasably integrated with a positive fit.

14. A centrifugal pump according to claim 14, **characterised in that** the valve housing (8) has an essentially cylindrical shape, is designed tapered at one end, and at the other end is preferably provided with a coupling for the releasable connection to the pump.

15. A centrifugal pump according to claim 11, **characterised in that** the pump housing is essentially cylindrical and the valve housing (8) connects to the pump housing in a flush manner and extends this upwards.

## Revendications

1. Pompe centrifuge, notamment pompe submersible (2) à plusieurs étages, avec une valve anti-retour (9) avec un siège de valve (19) et un corps obturateur (15) disposé de manière limitée mobile par rapport au siège, **caractérisée en ce que** le corps obturateur (15) est disposé en complémentarité de forme et mobile à l'intérieur d'un guide (16) qui entoure le corps obturateur (15) avec jeu, et que le contour intérieur du guide (16) sont configurés, dans le sens inverse de la direction principale du flux (13) du siège de valve, avec une convergence vers l'intérieur.

2. Pompe centrifuge selon la revendication 1, **caractérisée en ce que** le contour intérieur du guide (16) sont également configurés, dans le sens de la direction principale du flux (13), à partir d'une zone centrale (d2) espacée du siège de valve (19) vers une zone terminale (d1), avec une convergence vers l'intérieur.

3. Pompe centrifuge selon la revendication 2, **caractérisée en ce que** le contour intérieur du guide (16) s'étendent, dans leur zone terminale (26), radialement vers l'intérieur et, par rapport à la direction principale de flux (13), en retour.

4. Pompe centrifuge selon la revendication 2 ou 3, **caractérisée en ce que** le contour intérieur du guide (16) s'étendent, dans la zone centrale (d2), en forme de portions de cercle.

5. Pompe centrifuge selon l'une des revendications précédentes, **caractérisée en ce que** le guide est formé par des bras de guidage (16) disposés de manière répartie sur la circonférence du corps obturateur (15), qui sont fixées sur un anneau de maintien (20) commun.

6. Pompe centrifuge selon la revendication 5, **caractérisée en ce que** les bras de guidage (16') et l'anneau de maintien (20') sont réalisés en une seule pièce et de préférence comme élément coulé.

7. Pompe centrifuge selon la revendication 5, **caractérisée en ce que** les bras de guidage (16) et l'anneau de maintien (20) sont réalisés en une partie de tôle, les bras de guidage (16) étant formés par pliage du matériau de base et sont pliés de préférence de 90° par rapport à celui-ci.

8. Pompe centrifuge selon la revendication 6, **caractérisée en ce que** les bras de guidage (16) et l'anneau de maintien (20) sont réalisés en une partie de tôle annulaire et que les bras de guidage (16) sont pliés chacun autour d'une ligne (28) sensiblement radiale.

9. Pompe centrifuge selon la revendication 7, **caractérisée en ce que** les bras de guidage (16) sont pliés dans le sens de rotation du fluide déterminée par la turbine (3) et le dispositif directeur (4) du dernier étage de pompe.

10. Pompe centrifuge selon l'une des revendications précédentes, **caractérisée en ce que** le corps d'obturation (15) est formé par une coupelle réalisée en tôle, qui comprend une surface d'appui (24) annulaire inclinée orientée vers le siège de valve (19).

11. Pompe centrifuge selon la revendication 10, **caractérisée en ce que** le corps obturateur (15) présente une excroissance (25) centrale dans la zone entourée par la surface d'appui (24).

12. Pompe centrifuge selon l'une des revendications précédentes, **caractérisée en ce que** le siège de valve (19) est constitué par un élément annulaire (18) réalisé en tôle et un joint d'étanchéité (17) annulaire.

13. Pompe centrifuge selon l'une des revendications précédentes, **caractérisée en ce que** la valve anti-retour (9) comprend un corps de valve (8) dans lequel le guide (16), le corps obturateur (15) et le siège de valve (19) sont intégrés en complémentarité de forme et amovible.

14. Pompe centrifuge selon la revendication 13, **caractérisée en ce que** le corps de valve (8) présente une forme sensiblement cylindrique, se rétrécit à une extrémité et est pourvu, à l'autre extrémité, d'un accouplement pour un raccordement amovible à la pompe.

15. Pompe centrifuge selon la revendication 14, **caractérisée en ce que** le corps de pompe présente une forme sensiblement cylindrique et que le corps de valve (8) est contigu en affleurement au corps de pompe et prolonge celui-ci vers le haut.
